# EUROPÄISCHE PATENTSCHRIFT

(11) **EP 1 980 471 B1**
(45) Veröffentlichungstag und Bekanntmachung des Hinweises auf die Patenterteilung: **17.02.2016**
(21) Anmeldenummer: 08005076.8
(22) Anmeldetag: 19.03.2008
(51) Int. Cl.: B62D 21/15, B62D 25/20

(54) **Schwellerverstärkung für eine Kraftfahrzeugkarosserie**
Side sill reinforcement for motor vehicle bodywork
Renfort de longeron pour la carrosserie d'un véhicule automobile

(30) Priorität: 12.04.2007 DE 102007017165
(43) Veröffentlichungstag der Anmeldung: 15.10.2008
(73) Patentinhaber: GM Global Technology Operations LLC, Detroit, MI 48265-3000 (US)
(72) Erfinder: Enderich, Thomas, 65510 Hünstetten (DE); Leßmeister, Roland, 67697 Otterberg (DE)
(74) Vertreter: Spitzfaden, Ralf

(56) Entgegenhaltungen:
- DE-A1- 10 118 202
- JP-A- 5 319 301
- JP-A- 11 059 489
- US-A- 5 246 264

## Beschreibung

Die Erfindung betrifft ein Seitenteil für eine Kraftfahrzeugkarosserie mit einem sich längs erstreckenden Bodenschweller, mit einem an der vorgesehenen Außenwand angeordneten äußeren Seitenblech des Bodenschwellers und einem an der vorgesehenen Innenseite angeordneten inneren Seitenblech und mit einer zwischen den Seitenblechen angeordneten, ein Verstärkungsblech aufweisenden Schwellerverstärkung, wobei die Schwellerverstärkung in einem zwischen seiner oberen und unteren Begrenzung gelegenen mittleren Bereich des Bodenschwellers mit zumindest einem der Seitenbleche verbunden ist und wobei das Verstärkungsblech einen vertikalen, bis zur oberen Begrenzung des Bodenschwellers geführten Abschnitt und einen zweiten, bis zu der unteren Begrenzung des Bodenschwellers vertikal geführten Abschnitt hat, wobei die beiden Abschnitte des verstarkungsbleches mehrere U-förmige Verformungen aufweisen und dass das Verstärkungsblech über seine gesamte Länge einen konstanten Querschnitt aufweist.

Bei einem üblichen Bodenschweller durchdringt das Verstärkungsblech einen von den Seitenblechen gebildeten Hohlraum im Wesentlichen vertikal. Um eine ausreichende Sicherheit bei einem Crash herzustellen, ist es jedoch erforderlich, weitere Verstärkungselemente vorzusehen. Dies führt jedoch zu einer sehr hohen Anzahl an Bauteilen des Seitenteils und damit zu hohen Fertigungskosten.

In der JP 05-319301 bzw. in der US-A-5,246,264 sind jeweils Bodenschweller beschrieben, bei denen der mittlere Bereich der Schwellerverstärkung mit zumindest einem der Seitenbleche verbunden ist.

Die DE 101 18 202 A1 offenbart einen Schweller, bei dem die Schwellerverstärkung aus zwei Verstärkungsblechen besteht, die in ihrem mittleren Bereich miteinander verbunden sind. Bei allen Ausführungen ist der mittlere Bereich des Verstärkungsbleches jeweils einmal seitlich rinnenförmig verformt.

Aus der DE 10 2004 033 971 A1 ist zudem ein Bodenschweller bekannt geworden, bei dem ein einziges Seitenblech mit einem im Strangpressen gefertigten zweiten Seitenelement verbunden ist. Das im Strangpressen gefertigte zweite Seitenelement bildet die Schwellerverstärkung. Hierdurch lässt sich der Bodenschweller jedoch nicht aus kostengünstigen Blechen zusammenstellen.

Ein Bodenschweller gemäß dem Oberbegriff des Anspruches zeigt die DE 100 03 878 A1. Die Außenkontur des Querschnitts des Verstärkungsbleches ist der Innenkontur des Bodenschwellers angepasst, so dass das Verstärkungsblech passgenau im Bodenschweller liegt.

Der Erfindung liegt das Problem zugrunde, ein Seitenteil der eingangs genannten Art so weiterzubilden, dass es besonders kostengünstig zu fertigen ist und eine möglichst hohe Sicherheit bei einem Crash bietet.

Dieses Problem wird erfindungsgemäß dadurch gelöst, dass das Verstärkungsblech der Schwellerverstärkung an seinen Rändern jeweils einen Flansch zur Verbindung mit den Seitenblechen hat und zwischen den Flanschen eine U-förmige Verformung mit einer Basis hat und wenn die Basis der U-förmigen Verformung der Schwellerverstärkung an dem zumindest einen der Seitenbleche befestigt ist.

Dies trägt zur weiteren Erhöhung der Steifigkeit der Schwellerverstärkung, insbesondere bei quer zur Längsrichtung einwirkenden Kräften, bei. Vorzugsweise sind die U-förmigen Verformungen als Quersicken ausgebildet.

Durch diese Gestaltung stützt sich die Schwellerverstärkung bei einer Krafteinleitung in horizontaler Richtung an dem zumindest einem Seitenblech ab. Hierdurch wird eine besonders hohe Quersteifigkeit des Bodenschwellers sichergestellt. Damit bietet das erfindungsgemäße Seitenteil eine besonders hohe Sicherheit bei einem Crash. Da der Bodenschweller aus kostengünstigen Blechteilen zusammengestellt werden kann, lässt sich das erfindungsgemäße Seitenteil besonders kostengünstig fertigen. Durch die Erfindung weist der Bodenschweller eine hohe Quersteifigkeit auf, was eine Reduzierung der Blechdicke der Seitenbleche ermöglicht. Die dank der Erfindung geringe Anzahl an Bauteilen verringert zudem den Aufwand zum Abdichten des Bodenschwellers und verringert das Gewicht.

Eine besonders hohe Sicherheit bei einem Crash lässt sich gemäß einer vorteilhaften Weiterbildung der Erfindung einfach sicherstellen, wenn die Schwellerverstärkung einen von den Seitenblechen gebildeten Hohlraum in zumindest drei Kammern unterteilt.

Ein besonders hoher Schutz von Insassen des Kraftfahrzeuges lässt sich gemäß einer anderen vorteilhaften Weiterbildung der Erfindung sicherstellen, wenn das Verstärkungsblech in dem mittleren Bereich des Bodenschwellers an dem inneren Seitenblech befestigt ist.

Eine zuverlässige Abstützung einer so genannten B-Säule der Kraftfahrzeugkarosserie lässt sich gemäß einer anderen vorteilhaften Weiterbildung der Erfindung einfach sicherstellen, wenn die Schwellerverstärkung zwischen einer hinteren Säule und einer im mittleren Bereich des Seitenteils angeordneten Säule angeordnet ist.

Der Bodenschweller weist gemäß einer anderen vorteilhaften Weiterbildung der Erfindung sowohl bei einem Seitenaufprall als auch bei einem Frontalaufprall eine besonders hohe Stabilität auf, wenn die Schwellerverstärkung von einer hinteren Säule bis zu einer vorderen Säule des Seitenteils geführt ist. Auch ist hierdurch der Bodenschweller besonders torsionssteif. Dies trägt zur weiteren Erhöhung der Sicherheit der Fahrzeuginsassen bei einem Crash bei.

Die Montage der Schwellerverstärkung gestaltet sich gemäß einer anderen vorteilhaften Weiterbildung der Erfindung besonders einfach, wenn die Befestigung des Verstärkungsblechs an dem Seitenblech als Klebeverbindung ausgebildet ist. Alternativ können hierzu auch andere Verbindungsarten vorgesehen sein.

Zur weiteren Verringerung der Fertigungskosten des erfindungsgemäßen Seitenteils trägt es bei, wenn die U-förmige Verformung des Verstärkungsblechs der Schwellerverstärkung als Rollprofil gefertigt ist.

Wenn das Verstärkungsblech einen über die gesamte Länge konstanten Querschnitt aufweist ermöglicht dies die variable Anbindung der mittleren Säule des Seitenteils und zudem die Verwendung einer großen Anzahl von Gleichteilen bei einem für eine oder für zwei Türen vorgesehenen Seitenteil.

Die Anbindung der Säulen an dem Bodenschweller weist gemäß einer anderen vorteilhaften Weiterbildung der Erfindung eine besonders hohe Stabilität auf, wenn die Schwellerverstärkung unmittelbar mit einem in zumindest einer der Säulen angeordneten, vertikalen Verstärkungselement verbunden ist.

Das erfindungsgemäße Seitenteil lässt sich aus besonders biegesteifen Rahmen zusammenstellen, wenn mehrere Säulen an die Schwellerverstärkung angebunden und über ein Dachbauteil miteinander verbunden sind.

Die Erfindung lässt verschiedene Ausführungsformen zu. Zur weiteren Verdeutlichung ihres Grundprinzips sind mehrere davon in der Zeichnung dargestellt und werden nachfolgend beschrieben. Die Zeichnung zeigt in
- Fig. 1: ein Kraftfahrzeug mit einem erfindungsgemäßen Seitenteil in einer Seitenansicht,
- Fig. 2: einen Teilbereich des Seitenteils aus Figur 1 vor der Montage,
- Fig. 3: stark vergrößert eine Schnittdarstellung eines Bodenschwellers des Seitenteils aus Figur 2 in einer Schnittdarstellung entlang der Linie III - III,
- Fig. 4: eine perspektivische Darstellung eines Verstärkungsblechs des Bodenschwellers.

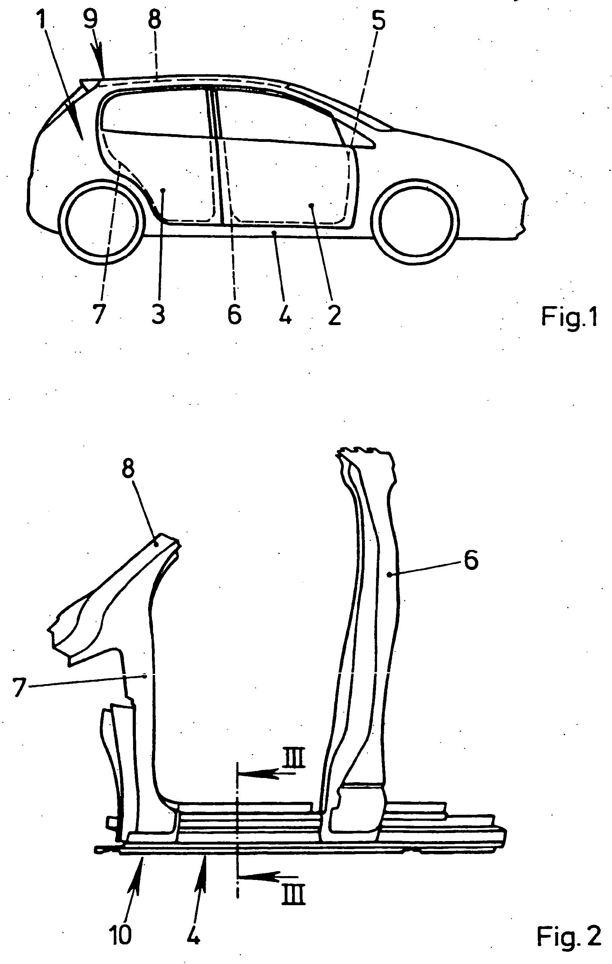

Figur 1 zeigt ein Kraftfahrzeug mit einer Seitenwand 1. Die Seitenwand 1 hat eine vordere Tür 2 und eine hintere Tür 3 und einen sich am Fahrzeugboden längs der Fahrtrichtung des Kraftfahrzeuges erstreckenden Bodenschweller 4. Weiterhin weist die Seitenwand 1 eine eine Fahrgastzelle in Fahrtrichtung begrenzende vordere Säule 5, eine zwischen den Türen 2, 3 angeordnete mittlere Säule 6 und eine die Fahrgastzelle gegen die Fahrtrichtung begrenzende hintere Säule 7 auf. Die Säulen 5 7 erstrecken sich jeweils von dem Bodenschweller 4 bis zu einem Dachbauteil 8 eines Daches 9 des Kraftfahrzeuges. Über den Bodenschweller 4 und das Dachbauteil 8 sind die Säulen 5 - 7 miteinander verbunden.

Figur 2 zeigt vergrößert ein Seitenteil 10 der Seitenwand 1 des Kraftfahrzeuges aus Figur 1 mit dem Bodenschweller 4 und zwei der Säulen 6, 7. Hierbei ist zu erkennen, dass die Säulen 6, 7 unmittelbar auf dem Bodenschweller 4 befestigt sind.

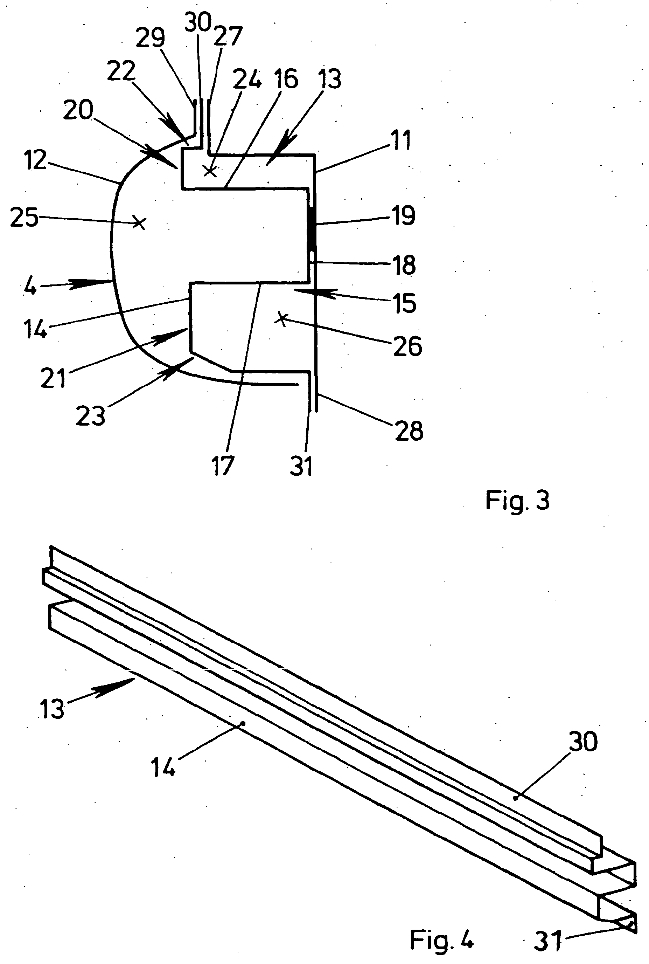

Figur 3 zeigt stark vergrößert eine Schnittdarstellung entlang der Linie III - III aus Figur 2 durch den Bodenschweller 4. Der Bodenschweller 4 hat ein inneres, der Fahrgastzelle zugewandtes Seitenblech 11 und ein äußeres, ein Teil der Außenhaut des Kraftfahrzeuges bildendes Seitenblech 12. Zwischen den Seitenblechen 11, 12 hat der Bodenschweller 4 eine Schwellerverstärkung 13 mit einem Verstärkungsblech 14. Das Verstärkungsblech 14 hat in einem mittleren, zwischen seiner oberen und unteren Begrenzung angeordneten Bereich eine U-förmige Verformung 15 mit zwei Schenkeln 16, 17 und einer Basis 18. Die Basis 18 ist an dem inneren Seitenblech 11 mittels einer Klebeverbindung 19 befestigt. Weiterhin hat das Verstärkungsblech 14 der Schwellerverstärkung 13 einen bis zu der oberen Begrenzung des Bodenschwellers 4 vertikal geführten Abschnitt 20 und einen zweiten, bis zu der unteren Begrenzung des Bodenschwellers 4 vertikal geführten Abschnitt 21. Die zu den Begrenzungen des Bodenschwellers geführten Abschnitte 20, 21 weisen zudem ebenfalls U-förmige Verformungen 22, 23 auf. Damit unterteilt das Verstärkungsblech 14 der Schwellerverstärkung 13 einen von den Seitenblechen 11, 12 des Bodenschwellers 4 gebildeten Hohlraum in drei Kammern 24, 25, 26. An den oberen und unteren Begrenzungen ist das Verstärkungsblech 14 der Schwellerverstärkung 13 mit Flanschen 27, 28, 29 der Seitenbleche 11, 12 verschweißt. Zur Verschweißung mit den Seitenblechen 11, 12 weist das Verstärkungsblech 14 ebenfalls Flansche 30, 31 auf.

Figur 4 zeigt in einer perspektivischen Darstellung, dass das Verstärkungsblech 14 über seine gesamte Länge einen gleichmäßigen Querschnitt aufweist. Hierdurch kann das Verstärkungsblech 14 als Rollprofil gefertigt werden.

### Bezugszeichenliste

- 1: Seitenwand
- 2, 3: Tür
- 4: Bodenschweller
- 5 - 7: Säule
- 8: Dachbauteil
- 9: Dach
- 10: Seitenteil
- 11, 12: Seitenblech
- 13: Schwellerverstärkung
- 14: Verstärkungsblech
- 15: U-förmige Verformung
- 16, 17: Schenkel
- 18: Basis
- 19: Klebeverbindung
- 20, 21: Abschnitt
- 22, 23: U-förmige Verformung
- 24 - 26: Kammer
- 27 - 29: Flansch
- 30, 31: Flansch

## Patentansprüche

1. Seitenteil (10) für eine Kraftfahrzeugkarosserie mit einem sich längs erstreckenden Bodenschweller (4), mit einer an der vorgesehenen Außenwand angeordneten äußeren Seitenblech (12) des Bodenschwellers (4) und einem an der vorgesehenen Innenseite angeordneten inneren Seitenblech (11) und mit einer zwischen den Seitenblechen (11, 12) angeordneten, ein Verstärkungsblech (14) aufweisenden Schwellerverstärkung (13), wobei die Schwellerverstärkung (13) in einem zwischen seiner oberen und unteren Begrenzung gelegenen mittleren Bereich des Bodenschwellers (4) mit zumindest einem der Seitenbleche (11, 12) verbunden ist und wobei das Verstärkungsblech (14) einen vertikalen, bis zur oberen Begrenzung des Bodenschwellers (4) geführten Abschnitt (20) und einen zweiten, bis zu der unteren Begrenzung des Bodenschwellers (4) vertikal geführten Abschnitt (21) hat, wobei die beiden Abschnitte (20, 21) des Verstärkungsbleches (14) mehrere U-förmige Verformungen (15, 22, 23) aufweisen und dass das Verstärkungsblech (14) einen über seine gesamte Länge einen konstanten Querschnitt aufweist, **dadurch gekennzeichnet, dass** das Verstärkungsblech (14) der Schwellerverstärkung (13) an seinen Rändern jeweils einen Flansch (30, 31) zur Verbindung mit den Seitenblechen (11, 12) hat und zwischen den Flanschen (30, 31) eine U-förmige Verformung (15) mit einer Basis (18) hat und dass die Basis (18) der U-förmigen Verformung (15) der Schwellerverstärkung (13) an dem zumindest einen der Seitenbleche (11) befestigt ist.

2. Seitenteil nach Anspruch 1, **dadurch gekennzeichnet, dass** die Schwellerverstärkung (13) einen von den Seitenblechen (11, 12) gebildeten Hohlraum in zumindest drei Kammern (24, 25, 26) unterteilt.

3. Seitenteil nach Anspruch 1 oder 2, **dadurch gekennzeichnet, dass** das Verstärkungsblech (14) in dem mittleren Bereich des Bodenschwellers (4) an dem inneren Seitenblech (11) befestigt ist.

4. Seitenteil nach zumindest einem der vorhergehenden Ansprüche, **dadurch gekennzeichnet, dass** die Schwellerverstärkung (13) zwischen einer hinteren Säule (7) und einer im mittleren Bereich des Seitenteils (10) angeordneten Säule (6) angeordnet ist.

5. Seitenteil nach zumindest einem der vorhergehenden Ansprüche, **dadurch gekennzeichnet, dass** die Schwellerverstärkung (13) von einer hinteren Säule (7) bis zu einer vorderen Säule (5) des Seitenteils (10) geführt ist.

6. Seitenteil nach zumindest einem der vorhergehenden Ansprüche, **dadurch gekennzeichnet, dass** die Befestigung des Verstärkungsblechs (14) an dem Seitenblech (11) als Klebeverbindung (19) ausgebildet ist.

7. Seitenteil nach zumindest einem der vorhergehenden Ansprüche, **dadurch gekennzeichnet, dass** die U-förmige Verformung (15) des Verstärkungsblechs (14) der Schwellerverstärkung (13) als Rollprofil gefertigt ist.

8. Seitenteil nach zumindest einem der vorhergehenden Ansprüche, **dadurch gekennzeichnet, dass** die Schwellerverstärkung (13) unmittelbar mit einem in zumindest einer der Säulen (5 - 7) angeordneten vertikalen Verstärkungselement verbunden ist.

9. Seitenteil nach zumindest einem der vorhergehenden Ansprüche, **dadurch gekennzeichnet, dass** mehrere Säulen (5 - 7) an die Schwellerverstärkung (13) angebunden und über ein Dachbauteil (8) miteinander verbunden sind.

## Claims

1. A side part (10) for a car body of a motor vehicle, comprising a base door sill (4) that extends longitudinally, an outer side plate (12) of the base door sill (4) which is provided on the outer wall, and an inner side plate (11) arranged on the provided inner side, and a door sill reinforcement (13) which is arranged between the side plates (11, 12) and comprises a reinforcing plate (14), wherein the door sill reinforcement (13) is connected in a middle region of the base door sill (4) situated between its upper and lower boundary to at least one of the side plates (11, 12), and wherein the reinforcing plate (14) comprises a vertical section (20) guided to the upper boundary of the base door sill (4) and a second section (21) which is vertically guided up to the lower boundary of the base door sill (4), wherein the two sections (20, 21) of the reinforcing plate (14) comprise several U-shaped deformations (15, 22, 23), and the reinforcing plate (14) has a cross-section which is constant over its entire length, **characterized in that** the reinforcing plate (14) of the door sill reinforcement (13) comprises at its edges a flange (30, 31) each for connection with the side plates (11, 12), and comprises a U-shaped deformation (15) with a base (18) between the flanges (30, 31), and the base (18) of the U-shaped deformation (15) of the door sill reinforcement (13) is fastened to at least one of the side plates (11).

2. A side part according to claim 1, **characterized in that** the door sill reinforcement (13) subdivides a cavity formed by the side plates (11, 12) into at least three chambers (24, 25, 26).

3. A side part according to claim 1 or 2, **characterized in that** the reinforcing plate (14) is fixed in the middle region of the base door sill (4) to the inner side plate (11).

4. A side part according to at least one of the preceding claims, **characterized in that** the door sill reinforcement (13) is arranged between a rear pillar (7) and a pillar (6) arranged in the middle region of the side part (10).

5. A side part according to at least one of the preceding claims, **characterized in that** the door sill reinforcement (13) is guided from a rear pillar (7) up to a front pillar (5) of the side part (10).

6. A side part according to at least one of the preceding claims, **characterized in that** the fastening of the reinforcing plate (14) to the side plate (11) is formed as a glued connection (19).

7. A side part according to at least one of the preceding claims, **characterized in that** the U-shaped deformation (15) of the reinforcing plate (14) of the door sill reinforcement (13) is produced as a rolled profile.

8. A side part according to at least one of the preceding claims, **characterized in that** the door sill reinforcement (13) is directly connected to a vertical reinforcing element arranged in at least one of the pillars (5 to 7).

9. A side part according to at least one of the preceding claims, **characterized in that** several pillars (5 to 7) are attached to the door sill reinforcement (13) and are connected to each other via a roof component (8).

## Revendications

1. Partie latérale (10) pour une carrosserie de véhicule à moteur avec un longeron de plancher (4) qui s'étend longitudinalement, avec une tôle latérale extérieure (12) du longeron de plancher (4) disposé sur la paroi extérieure prévue et avec une tôle latérale intérieure (11) disposée sur le côté intérieur prévu et avec un renfort de longeron (13) disposé entre les tôles latérales (11, 12) et présentant une tôle de renfort (14), dans laquelle le renfort de longeron (13) est relié, dans une partie médiane du longeron de plancher (4) située entre ses délimitations supérieure et inférieure, avec au moins une des tôles latérales (11, 12) et dans laquelle la tôle de renfort (14) possède une section (20) verticale conduite jusqu'à la délimitation supérieure du longeron de plancher (4) et une deuxième section (21) conduite verticalement jusqu'à la délimitation inférieure du longeron de plancher (4), les deux sections (20, 21) de la tôle de renfort (14) présentant plusieurs déformations en forme de U(15, 22, 23) et la tôle de renfort (14) ayant une section constante sur toute sa longueur, **caractérisée en ce que** la tôle de renfort (14) du renfort de longeron (13) possède sur chacun de ses bords une bride (30, 31) pour l'assemblage avec les tôles latérales (11, 12) et entre les brides (30, 31) une déformation en forme de U (15) avec une base (18) et **en ce que** la base (18) de la déformation en forme de U (15) du renfort de longeron (13) est fixée à l'au moins une des tôles latérales (11).

2. Partie latérale selon la revendication 1, **caractérisée en ce que** le renfort de longeron (13) partage un espace creux formé par les tôles latérales (11, 12) en au moins deux compartiments (24, 25, 26).

3. Partie latérale selon la revendication 1 ou 2, **caractérisée en ce que** la tôle de renfort (14) est fixée dans la partie médiane du longeron de plancher (4) à la tôle latérale intérieure (11).

4. Partie latérale selon l'une au moins des revendications précédentes, **caractérisée en ce que** le renfort de longeron (13) est disposé entre un montant arrière (7) et un montant (6) disposé dans la partie médiane de la partie latérale (10).

5. Partie latérale selon l'une au moins des revendications précédentes, **caractérisée en ce que** le renfort de longeron (13) est conduit d'un montant arrière (7) jusqu'à un montant avant (5) de la partie latérale (10).

6. Partie latérale selon l'une au moins des revendications précédentes, **caractérisée en ce que** la fixation de la tôle de renfort (14) sur la tôle latérale (11) est conçue comme un assemblage collé (19).

7. Partie latérale selon l'une au moins des revendications précédentes, **caractérisée en ce que** la déformation en forme de U (15) de la tôle de renfort (14) du renfort de longeron (13) est obtenue par formage du profil aux galets.

8. Partie latérale selon l'une au moins des revendications précédentes, **caractérisée en ce que** le renfort de longeron (13) est directement relié à un élément de renfort vertical disposé dans au moins un des montants (5-7).

9. Partie latérale selon l'une au moins des revendications précédentes, **caractérisée en ce que** plusieurs montants (5-7) sont rattachés au renfort de longeron (13) et reliés entre eux par une pièce de toit (8).
